Europäisches Patentamt

European Patent Office

Office européen des brevets

(11) Numéro de publication: **0 307 884 B1**

# FASCICULE DE BREVET EUROPEEN

(45) Date de publication de fascicule du brevet: **19.02.92**

(51) Int. Cl.5: **A47B 96/06**, A47J 45/00

(21) Numéro de dépôt: **88115011.4**

(22) Date de dépôt: **14.09.88**

(54) **Dispositif d'accrochage d'un appareil électroménager, tel qu'un four, sur une paroi verticale.**

(30) Priorité: **16.09.87 FR 8712825**

(43) Date de publication de la demande:
**22.03.89 Bulletin 89/12**

(45) Mention de la délivrance du brevet:
**19.02.92 Bulletin 92/08**

(84) Etats contractants désignés:
**DE ES GB NL SE**

(56) Documents cités:
**FR-A- 2 215 104**
**US-A- 2 830 863**

(73) Titulaire: **MOULINEX**
**7 à 15, rue Jules-Ferry**
**F-93171 Bagnolet Cédex(FR)**

(72) Inventeur: **Chartrain, Pierre Société Moulinex**
**2 rue de l'Industrie Cormelles-Le-Royal**
**F-14123 Ifs(FR)**
Inventeur: **Aurensan, Jean-Claude, A. P. Société Moulinex**
**2 rue de l'Industrie Cormelles-Le-Royal**
**F-14123 Ifs(FR)**

(74) Mandataire: **May, Hans Ulrich, Dr.**
**Patentanwalt Dr. H.U. May Thierschstrasse 27**
**W-8000 München 22(DE)**

EP 0 307 884 B1

Rank Xerox (UK) Business Services

# Description

L'invention se rapporte à un dispositif d'accrochage d'un appareil électroménager, tel qu'un four, sur une paroi verticale, telle que, par exemple, un mur de cuisine et comprenant, d'une part, au moins un support comportant une première partie destinée à se fixer sur la paroi verticale et munie d'organes de fixation sur cette paroi, et une seconde partie décalée horizontalement de cette première partie et située à distance de ladite paroi verticale et présentant une portée ainsi qu'une zone d'accrochage, et d'autre part, au moins une patte d'accrochage susceptible d'être fixée sur la paroi postérieure du four et comportant une surface d'appui ainsi qu'un ergot dirigé vers le bas et destiné à venir en prise respectivement avec ladite portée et avec ladite zone d'accrochage.

Un dispositif de ce type est connu, par exemple, par FR-A-2 215 104.

L'invention a pour but, notamment, d'apporter un perfectionnement à ce genre de support de manière à faciliter le montage du four sous un meuble et d'éviter tout décrochement de ce four lorsqu'il est soumis à un choc involontaire de la part de l'utilisateur. Selon une première caractéristique, la seconde partie du support présentant la forme d'une plaquette destinée à être disposée dans un plan sensiblement vertical avec son bord supérieur disposé horizontalement, la portée est constituée par ledit bord supérieur et la zone d'accrochage est constituée par la région supérieure de la face interne de cette plaquette, permettant ainsi un accrochage par chevauchement et coulissement de la patte sur le support selon un mouvement de translation latérale parallèle à la paroi verticale, l'une des première ou seconde parties comportant en outre une butée qui est disposée au-dessus de la zone d'accrochage à une distance inférieure à la hauteur de l'ergot de la patte, empêchant ainsi tout déverrouillage de cette patte lorsque cet ergot est amené sous cette butée.

L'invention a également pour but de faciliter le montage du four, non seulement sous un meuble, mais aussi à proximité de l'un des angles de la cuisine ou d'un meuble.

Selon une seconde caractéristique, la butée étant formée par la branche horizontale supérieure d'un crochet qui est agencé dans le plan de la seconde plaquette en une extrémité de cette plaquette et dont l'ouverture est tournée vers l'extrémité libre de la plaquette, et la première partie du support présentant également la forme d'une plaquette disposée dans un plan parallèle à la seconde plaquette avec l'un de ses bords externes disposé horizontalement, cette première plaquette comporte sensiblement les mêmes portée, zone d'accrochage et crochet que la seconde plaquette, tandis que cette seconde plaquette comporte pratiquement les mêmes organes de fixation, lesdites première et seconde plaquettes étant reliées l'une à l'autre de telle manière que le choix de la direction d'ouverture, soit vers la droite, soit vers la gauche, du crochet destiné à venir en prise avec la patte d'accrochage, est directement lié au choix de la fixation de la première ou seconde plaquette sur la paroi verticale.

Ainsi, grâce à la similarité des deux plaquettes et à leur interchangeabilité, on comprendra que, si l'utilisateur souhaite, par exemple, accrocher le four dans l'angle gauche de la cuisine et sous un meuble, il disposera le support avec la seconde plaquette ayant son crochet ouvert vers la droite et engagera par coulissement latéral la patte d'accrochage dans ce crochet, et s'il désire accrocher le four dans l'angle droit de la cuisine, il intervertira l'ouverture du crochet de façon à ce qu'elle soit dirigée vers la gauche.

D'autres caractéristiques avantageuses sont definies aux revendications 2 à 5.

Les caractéristiques et avantages de l'invention ressortiront d'ailleurs de la description qui va suivre, à titre d'exemple, en référence au dessin annexé dans lequel :

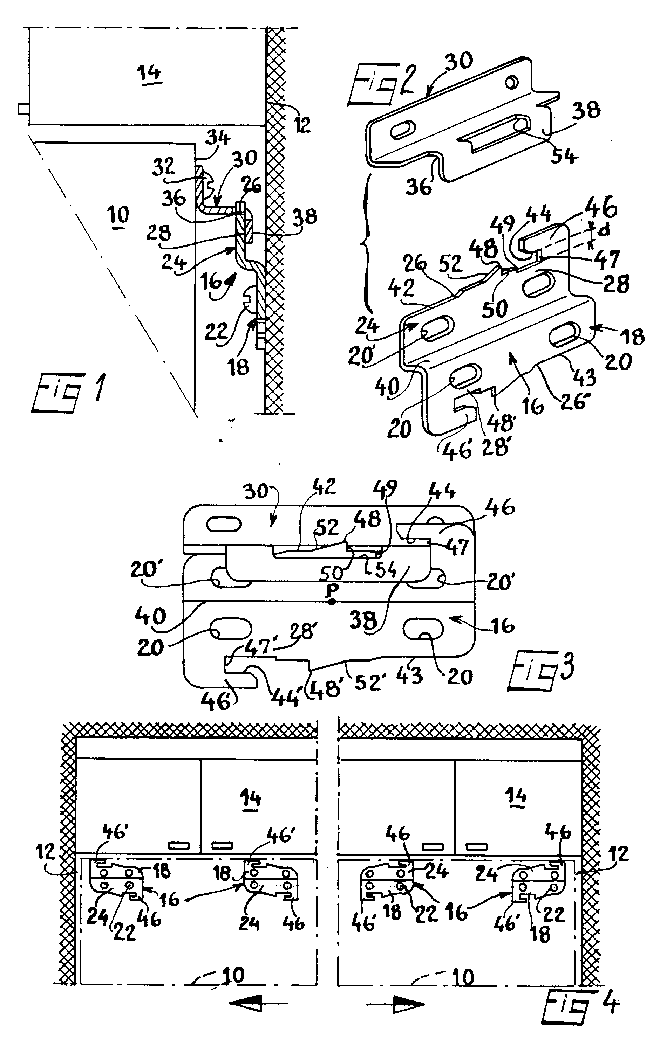

la figure 1 représente, en coupe verticale, un dispositif d'accrochage selon l'invention, destiné à monter un four sur un mur et sous un meuble, et comportant un support fixé au mur et une patte d'accrochage fixée audit four ; la figure 2 représente, en perspective, le support et la patte d'accrochage ; la figure 3 représente, en élévation, la patte d'accrochage en prise avec le support ; la figure 4 représente schématiquement, dans sa partie gauche, deux supports agencés sous un meuble et destinés à permettre l'accrochage du four dans l'angle gauche d'une cuisine, et dans sa partie droite, les mêmes supports inversés de manière à permettre l'accrochage du four dans l'angle droit d'une cuisine.

Le dispositif d'accrochage représenté, notamment aux figures 1 et 4 est destiné à permettre le montage d'un four 10, par exemple un four à micro-ondes, sur une paroi verticale 12, telle qu'un mur, et sous un meuble de cuisine 14 lui-même fixé sur ce mur. A cet effet, ce dispositif d'accrochage comprend, d'une part, deux supports 16 comprenant chacun une première partie 18 destinée à venir s'appliquer contre le mur 12 et comportant des organes de fixation tels que des trous 20 permettant le passage de vis 22, et une seconde partie 24 décalée horizontalement de cette première partie 18 et située à distance du mur et présentannt une portée 26 et une zone d'accrochage 28, et d'autre part, deux pattes d'accrochage 30 susceptibles d'être fixées au moyen de vis 32 sur la paroi postérieure 34 du four 10 et comportant chacune une surface d'appui 36 et un ergot 38 dirigé vers le bas, et destinés à venir en prise respectivement avec ladite portée 26 et avec ladite zone d'accrochage 28 de chacun des supports.

Comme on le voit bien sur la figure 2, chaque support 16 est constitué par une tôle de forme générale rectangulaire présentant un pli 40 qui est disposé dans un plan transversal médian s'étendant parallèlement aux deux bords opposés longitudinaux 42 et 43 et qui délimite ainsi les deux parties 18 et 24 qui s'étendent respectivement dans deux plans parallèles et qui présentent chacune la forme d'une plaquette.

Selon une première caractéristique de l'invention, chaque partie ou plaquette 24 étant destinée à être disposée dans un plan vertical avec son bord supérieur 42 situé dans un plan horizontal, la portée 26 est constituée par ce bord 42 et la zone d'accrochage 28 est formée par la région supérieure de la face interne de cette plaquette, la plaquette 24 comportant en outre une butée 44 qui est disposée au-dessus de la zone d'accrochage 28 à une distance d (figure 2) inférieure à la hauteur de l'ergot 38. Cette butée 44 est formée par la branche horizontale supérieure d'un crochet 46 qui est agencé dans le plan de la plaquette en une extrémité de cette plaquette et dont l'ouverture est tournée vers l'extrémité libre de cette plaquette, le fond 47 du crochet constituant un arrêtoir latéral pour la patte.

Comme illustré aux figures 1 et 4, pour accrocher le four 10, par exemple sous le meuble 14 et à proximité du fond de ce meuble, on place les supports 16 à une distance appropriée par rapport à ce fond de meuble ; on fixe les pattes 30 sur la paroi arrière 34 du four 10 ; on engage les dites pattes 30 sur les extrémités libres des supports en mettant en prise les ergots 38 avec les zones d'accrochage 28 et en faisant reposer les surfaces d'appui 36 sur les portées 26 des supports ; et on fait coulisser latéralement le four en direction des crochets 46 jusqu'à ce que les ergots d'accrochage 38 viennent respectivement au contact des arrêtoirs 47. Une fois le four mis en place, on comprend que si une force quelconque, telle qu'un heurt, dirigée vers le haut, est appliquée au four, au moins un des ergots 38 vient heurter le butée 44 correspondante empêchant ainsi tout déverrouillage de la patte de son support.

Dans un but de sécurité, on prévoit que la portée 26, formée par le bord supérieur 42, comporte un cran 48 dirigé vers le haut et agencé dans la région antérieure au crochet 44, ce cran présentant au moins une arête vive 50 tournée vers l'ouverture du crochet, et une pente 52 tournée vers l'extrémité libre de la plaquette, tandis que la patte 30 présente un lumière 54 destinée à recevoir par emboîtement le cran 48. Pour assurer le positionnement correct de l'ergot 38 sous la butée 44, la portée 26 présente aussi un léger épaulement 49 situé entre le cran 48 et l'arrêtoir 47. Ainsi, comme on le voit mieux sur la figure 3, une fois la patte 30 mise en place sur le support 16, on comprend que le désengagement latéral de cette patte vers l'extrémité libre de la plaquette ne peut se produire que si, d'une part, l'ergot 38 est dégagé de l'épaulement 49 et de la butée 44, et d'autre part la lumière 54 de la patte est dégagée volontairement du cran 48.

Selon une seconde caractéristique de l'invention, la première plaquette 18 comporte sensiblement les mêmes portée 26′, cran 48′, zone d'accrochage 28′ et crochet 46′ que la seconde plaquette 24, tandis que cette seconde plaquette comporte pratiquement les mêmes trous 20′ de fixation, les deux crochets 46 et 46′ étant agencés de façon symétrique par rapport à un point P situé dans la région médiane de la tôle formant le support, respectivement aux deux extrémités opposées de ladite tôle avec leur ouverture orientée respectivement selon deux directions opposées parallèles au pli 40. Du fait de cette symétrie par rapport à un point, les deux plaquettes 18 et 24 comportent sur leurs bords 42 et 43 les mêmes éléments (pente 52′, cran 48′), mais orientés différemment. Ainsi, comme on le comprend notamment en se reportant à la figure 4, les plaquettes 18 ou 24 pouvant être utilisées alternativement comme plaquette de fixation sur le mur ou comme plaquette d'accrochage, par simple retournement autour d'un axe s'étendant selon le pli 40, les supports 16 peuvent être, soit fixés avec les crochets s'ouvrant vers la droite (partie gauche de la figure 4) ce qui autorise l'accrochage du four à proximité de l'angle gauche d'une cuisine, soit fixée avec les crochets s'ouvrant vers la gauche (partie droite de la figure 4) autorisant l'accrochage du four à proximité de l'angle droit.

**Revendications**

1. Dispositif d'accrochage d'un appareil électroménager tel qu'un four (10) sur une paroi verticale (12), telle que par exemple un mur, et comprenant, d'une part, au moins un support (16) comportant une première partie (18) destinée à se fixer sur la paroi verticale et munie d'organes de fixation (20) sur cette paroi, et une seconde partie (24) décalée horizontalement de cette première partie (18) et située à distance de ladite paroi verticale et présentant une portée (26) ainsi qu'une zone d'accrochage (28), et d'autre part, au moins une patte d'accrochage (30) susceptible d'être fixée sur la paroi postérieure (34) du four (10) et comportant une surface d'appui (36) ainsi qu'un ergot (38) dirigé vers le bas et destinés à venir en prise respectivement avec ladite portée (26) et avec ladite zone d'accrochage (28), **caractérisé** en ce que la seconde partie (24) du support (16) présentant la forme d'une plaquette destinée à être disposée sensiblement dans un plan vertical avec son bord supérieur (42) disposé horizontalement, la portée (26) est constituée par ledit bord supérieur et la zone d'accrochage (28) est constituée par la région supérieure de la face interne de cette plaquette permettant ainsi un accrochage par chevauchement et coulissement de la patte (30) sur le support (16) selon un mouvement de translation latérale parallèle à la paroi verticale (12), l'une des première (18) ou seconde (24) parties comportant en outre une butée (44) qui est disposée au dessus de la zone d'accrochage (28) à une distance (d) inférieure à la hauteur de l'ergot (38) de la patte (30), empêchant ainsi tout déverrouillage de ladite patte lorsque ledit ergot est amené sous ladite butée.

2. Dispositif d'accrochage selon la revendication 1,
**caractérisé** en ce que la butée (44) est formée par la branche horizontale supérieure d'un crochet (46) qui est agencé dans le plan de la seconde partie ou plaquette (24) en une extrémité de cette plaquette et dont l'ouverture est tournée vers l'extrémité libre de ladite plaquette, le fond du crochet constituant un arrêtoir latéral (47) pour l'ergot (38) de la patte (30).

3. Dispositif d'accrochage selon la revendication 2,
**caractérisé** en ce que la portée (26) comporte un cran (48) dirigé vers le haut et agencé dans la région antérieure au crochet (46), ce cran (48) présentant une arête vive (50) tournée vers l'ouverture dudit crochet et une pente (52) tournée vers l'extrémité libre de la plaquette, tandis que la patte (30) présente une lumière (54) destiné à recevoir par emboîtement ledit cran (48).

4. Dispositif d'accrochage selon la revendication 2 ou la revendication 3,
**caractérisé** en ce que la première partie (18) du support (16) présentant également la forme d'une plaquette disposée dans un plan parallèle à la seconde plaquette (24) avec l'un (43) de ses bords externes disposés horizontalement, cette première partie ou plaquette comporte sensiblement les mêmes portée (26'), cran (48'), zone d'accrochage (28') et crochet (46') que la seconde plaquette (24), tandis que cette seconde plaquette comporte pratiquement les mêmes organes de fixation (20'), lesdites première et seconde plaquettes étant reliées l'une à l'autre de telle manière que le choix de la direction d'ouverture, soit vers la droite, soit vers la gauche, du crochet (26 ou 26') destiné à venir en prise avec l'ergot (38) de la patte l'accrochage (30), est directement lié au choix de la fixation de la première (18) ou de la seconde (24) plaquette sur la paroi verticale (12).

5. Dispositif d'accrochage selon la revendication 4,
**caractérisé** en ce que le support est constitué par une pièce unique, par exemple en tôle, de forme générale rectangulaire présentant un pli (40) qui est disposé dans un plan transversal s'étendant parallèlement aux deux bords opposés externes longitudinaux (42 et 43), et qui délimite ainsi les deux plaquettes (18 et 24), les deux crochets (46 et 46') étant agencés respectivement aux deux extrémités opposées de ladite pièce unique avec leur ouverture orientée respectivement selon deux directions opposées parallèles audit pli (40).

**Claims**

1. A device for hooking a domestic electrical appliance, such as an oven (10), on a vertical partition (12), such as a wall for example, comprising, on the one hand, at least one support (16) comprising a first part (18), adapted to be fixed on the vertical wall and equipped with means for fixing (20) to this wall, and a second part (24), horizontally offset from this first part (18) and located at a distance from the said vertical wall, which comprises a bearing region (26) and also a hooking on region (28) and comprising, on the other hand, at least one hooking on bracket (30) which can be fixed to the rear wall (34) of the oven (10) and comprises a bearing surface (36) and a downwardly directed lug (38) adapted to engage respectively with the said bearing region (26) and with the said hooking on region (28), characterized in that the second part (24) of the support (16) has the form of a plate adapted to be disposed in a substantially vertical plane with its upper edge (42) disposed horizontally, the bearing region (26) is constituted by the said upper edge and the hooking on region (28) is constituted by the upper region of the inner surface of this plate thus enabling hooking on by overlapping and sliding of the bracket (30) on the support (16) in a lateral translation movement parallel to the vertical wall (12), one of the first (18) or second (24) parts additionally comprising a stop (44) which is located above the hooking on region (28) at a distance (d) less than the height of the lug (38) of the bracket (30), thus preventing any unlocking of the said bracket when the said lug is put under the said stop.

2. A hooking on device according to claim 1, characterized in that the stop (44) is formed by the upper horizontal arm of a hook (46) which is made in the plane of the second part or plate (24) at one end of this plate and the mouth of which faces towards the free end of the said plate, the base of the hook constituting a lateral stop (47) for the lug (38) of the bracket (30).

3. A hooking on device according to claim 2, characterized in that the bearing region (26) comprises an upwardly directed step (48) formed in the region in front of the hook (46), this step (48) comprising a sharp edged stop (52) facing towards the mouth of the said hook and a slope (52) facing towards the free end of the plate, whilst the bracket (30) comprises a window (54) adapted to fit over the said step (48).

4. A hooking on device according to claim 2 or claim 3, characterized in that the first part (18) of the support (16) also has the form of a plate disposed in a plane parallel to the second plate (24) having one (43) of its external edges disposed horizontally, this first part or plate comprises a substantially similar bearing region (26'), step (48'), hooking on region (28') and hook (46') as the second plate (24), and this second plate comprises substantially similar fixing means (20'), the said first and second plates being connected to one another in such a manner that the choice of the direction of the mouth, either to the right or to the left, of the hook (26 or 26') intended to engage with the lug (38) of the hooking on bracket (30) is directly related to the choice of whether the first (18) or the second (24) plate is fixed to the vertical wall (12).

5. A hooking on device according to claim 4, characterized in that the support consists of a single piece, for example of sheet metal, having a generally rectangular shape comprising a fold (40) which is disposed in a transverse plane extending parallel to the two opposite longitudinal external edges (42 and 43) and which therefore delimits the two plates (18 and 24), the two hooks (46 and 46') being formed respectively at the two opposite ends of the said single piece with their mouths directed respectively in two opposite directions parallel to the said fold (40).

## Patentansprüche

1. Vorrichtung zum Aufhängen eines Elektro-Haushaltsgeräts, wie eines Ofens (10), an einer senkrechten Wand (12), wie z.B. einer Mauerwand, mit einerseits mindestens einer Stütze (16) mit einem ersten Teil (18), der zur Befestigung an der senkrechten Wand bestimmt ist und mit Elementen (20) zur Befestigung an dieser Wand versehen ist, und einem zweiten Teil (24), der waagerecht von diesem ersten Teil (18) versetzt und in einem Abstand von der senkrechten Wand angeordnet ist und einen Stützbereich (26) sowie einen Einhängebereich (28) aufweist, und mit andererseits mindestens einem Aufhängeträger (30), der an der Rückwand (34) des Ofens (10) befestigbar ist und eine Auflagefläche (36) sowie einen nach unten gerichteten Vorsprung (38) aufweist, die jeweils dazu bestimmt sind, in Eingriff mit dem Stützbereich (26) und mit dem Einhängebereich (28) zu kommen, **dadurch gekennzeichnet,** daß der zweite Teil (24) der Stütze (16) die Form einer Platte besitzt, die für eine Anordnung in einer im wesentlichen vertikalen Ebene mit einerhorizontalen Ausrichtung ihrer Oberkante (42) bestimmt ist, wobei der Stützbereich (26) von der Oberkante und der Einhängebereich (28) vom oberen Bereich der Innenseite dieser Platte gebildet wird, wodurch der Träger (30) an der Stütze (16) aufgehängt werden kann, indem er diese übergreift und auf ihr in einer seitlichen Bewegung parallel zur senkrechten Wand (12) verschoben wird, wobei der eine der beiden Teile, der erste Teil (18) oder zweite Teil (24) außerdem einen Anschlag (44) aufweist, der oberhalb des Einhängebereichs (28) in einem Abstand (d), der kleiner als die Höhe des Vorsprunges (38) des Trägers (30) ist, angeordnet ist, wodurch jede Entriegelung des Trägers verhindert wird, wenn der Vorsprung unter den Anschlag gebracht ist.

2. Aufhängevorrichtung nach Anspruch 1, **dadurch gekennzeichnet,** daß der Anschlag (44) vom oberen waagerechten Arm eines Hakens (46) gebildet ist, der in der Ebene des zweiten Teils oder der Platte (24) an einem Ende derselben ausgebildet ist und dessen Öffnung dem freien Ende dieser Platte zugewandt ist, wobei der Grund des Hakens einen seitlichen Anschlag (47) für den Vorsprung (38) des Trägers (30) bildet.

3. Aufhängevorrichtung nach Anspruch 2, **dadurch gekennzeichnet,** daß der Stützbereich (26) eine nach oben gerichtete Nase (48) aufweist, die in dem vor dem Haken (46) liegenden Bereich ausgebildet ist, wobei diese Nase (48) eine der Öffnung des Hakens zugewandte scharfe Kante (50) und eine dem freien Ende der Platte zugewandte Schrägfläche (52) aufweist, während der Träger (30) ein Langloch (54) aufweist, das dazu bestimmt ist, diese Nase (48) durch Umgreifen aufzunehmen.

4. Aufhängevorrichtung nach Anspruch 2 oder 3, **dadurch gekennzeichnet,** daß der erste Teil (18) der Stütze (16) ebenfalls die Form einer Platte aufweist, die in einer zur zweiten Platte (24) parallelen Ebene angeordnet ist, wobei die eine (43) ihrer Außenkanten horizontal angeordnet ist und dieser erste Teil oder diese Platte im wesentlichen die gleichen Elemente Stützfläche (26'), Nase (48'), Einhängebereich (28') und Haken (46') wie die zweite Platte (24) aufweist, während diese zweite Platte praktisch die gleichen Befestigungselemente (20') aufweist und die erste Platte und zweite Platte miteinander so verbunden sind, daß die Wahl der Öffungsrichtung entweder nach rechts oder nach links des Hakens (26 oder 26'), der dazu bestimmt ist, mit dem Vorsprung (38) des Aufhängeträgers (30) in Eingriff zu kommen, unmittelbar verbunden ist mit der Wahl der Befestigung der ersten (18) oder zweiten (24) Platte an der senkrechten Wand (12).

5. Aufhängevorrichtung nach Anspruch 4, **dadurch gekennzeichnet,** daß die Stütze aus einem einzigen Teil, beispielsweise aus Blech von im ganzen rechteckiger Form besteht, der einen Falz (40) aufweist, der in einer Querebene angeordnet ist, die sich parallel zu den beiden entgegengesetzten äußeren Längskanten (42 und 43) erstreckt und so die zwei Platten (18 und 24) begrenzt, wobei die zwei Haken (46 und 46') jeweils an den beiden entgegengesetzten Enden dieses einzigen Teils ausgebildet und ihre Öffnungen jeweils in zwei entgegengesetzte, zum Falz (40) parallele Richtungen gerichtet sind.

Fig 1

Fig 2

Fig 3

Fig 4